# EUROPÄISCHE PATENTANMELDUNG

(11) **EP 4 475 420 A1**
(43) Veröffentlichungstag der Anmeldung: **11.12.2024**
(21) Anmeldenummer: 23177244.3
(22) Anmeldetag: 05.06.2023
(51) Int. Cl.: H02M 7/00, H02J 3/18, H02M 7/483

(54) **MMC DELTA STATCOM MIT ANTI-SERIELL VERSCHALTETEN HALBRÜCKENMODULEN**

(71) Anmelder: Siemens Energy Global GmbH & Co. KG, 81739 München (DE)
(72) Erfinder: Pieschel, Martin, 90518 Altdorf (DE)

(57) **Zusammenfassung**

Die Erfindung betrifft eine Anordnung (1) mit einem Multilevelstromrichter (3) zur Blindleistungsabgabe an ein Energieversorgungsnetz (10). Der Multilevelstromrichter (3) weist drei Modulzweige (301, 302, 302) auf, die in einer Dreieckschaltung angeordnet sind. Jeder Modulzweig (301, 302, 302) weist in einer elektrischen Reihenschaltung eine Mehrzahl von Submodulen (510) auf. Jeder Modulzweig (301, 302, 302) weist eine erste Gruppe (311) der Submodule (510) und eine zweite Gruppe (312) der Submodule (510) auf.

Die Submodule (510) der ersten Gruppe (311) weisen jeweils einen ersten elektrischen Energiespeicher (618), ein erstes elektronisches Schaltelement (701) und ein zweites elektronisches Schaltelement (702) auf, wobei das erste elektronische Schaltelement (701) und das zweite elektronische Schaltelement (702) so angeordnet sind, dass der erste elektrische Energiespeicher (618) mit einer ersten Polarität (U1) in die Reihenschaltung geschaltet werden kann.

## Beschreibung

Die Erfindung betrifft eine Anordnung mit einem Multilevelstromrichter zur Blindleistungsabgabe an ein Energieversorgungsnetz und ein Verfahren zur Blindleistungsabgabe an ein Energieversorgungsnetz.

Elektrische Energieversorgungsnetze benötigen Blindleistung, um ordnungsgemäß zu funktionieren. Blindleistung wurde früher hauptsächlich von großen Kraftwerken bereitgestellt. Im Zuge der Energiewende werden große zentrale Kraftwerke zunehmend durch dezentrale Energieerzeugungsanlagen ersetzt, beispielsweise durch Windenergieanlagen oder Photovoltaikanlagen. Es besteht jedoch weiterhin ein Bedarf an Blindleistung.

Der Erfindung liegt die Aufgabe zugrunde, eine Anordnung und ein Verfahren anzugeben, mit denen Blindleistung an ein Energieversorgungsnetz abgegeben werden kann.

Diese Aufgabe wird erfindungsgemäß gelöst durch eine Anordnung und durch ein Verfahren nach den unabhängigen Patentansprüchen. Vorteilhafte Ausgestaltungen der Anordnung und des Verfahrens sind in den abhängigen Patentansprüchen angegeben.

Offenbart wird eine Anordnung mit einem Multilevelstromrichter zur Blindleistungsabgabe an ein elektrisches Energieversorgungsnetz, wobei
- der Multilevelstromrichter drei Modulzweige aufweist, die in einer Dreieckschaltung angeordnet sind,
- jeder Modulzweig in einer elektrischen Reihenschaltung eine Mehrzahl von Submodulen aufweist,
- jeder Modulzweig eine erste Gruppe der Submodule und eine zweite Gruppe der Submodule aufweist, wobei
- die Submodule der ersten Gruppe jeweils einen ersten (unipolaren) elektrischen Energiespeicher, ein erstes elektronisches Schaltelement und ein zweites elektronisches Schaltelement aufweisen, wobei das erste elektronische Schaltelement und das zweite elektronische Schaltelement so angeordnet sind, dass der erste elektrische Energiespeicher (ausschließlich) mit einer ersten Polarität in die Reihenschaltung geschaltet werden kann,
- die Submodule der zweiten Gruppe jeweils einen zweiten (unipolaren) elektrischen Energiespeicher, ein drittes elektronisches Schaltelement und ein viertes elektronisches Schaltelement aufweisen, wobei das dritte elektronische Schaltelement und das vierte elektronische Schaltelement so angeordnet sind, dass der zweite elektrische Energiespeicher (ausschließlich) mit einer zweiten Polarität in die Reihenschaltung geschaltet werden kann, und
- die erste Polarität und die zweite Polarität (in der Reihenschaltung) entgegengesetzt zueinander gerichtet sind.

Bei dieser Anordnung ist vorteilhaft, dass für den Multilevelstromrichter lediglich Submodule benötigt werden, die in der Lage sind, den elektrischen Energiespeicher (ausschließlich) mit einer einzigen Polarität in die Reihenschaltung zu schalten (beispielsweise sog. Halbbrücken-Submodule). Insbesondere werden keine Submodule benötigt, die in der Lage sind, den elektrischen Energiespeicher mit zwei verschiedenen (entgegengesetzten) Polaritäten in die Reihenschaltung zu schalten. Solche Zwei-Polaritäten-Submodule (beispielsweise sog. Vollbrücken-Submodule) wurden nämlich bisher vergleichsweise wenig bei Multilevelstromrichtern eingesetzt. Dadurch sind die Entwicklungs- und Fertigungskosten für Zwei-Polaritäten-Submodule vergleichsweise hoch.

Durch die Submodule der ersten Gruppe und die Submodule der zweiten Gruppe ist sichergestellt, dass in jedem Modulzweig sowohl Spannungen der ersten Polarität (beispielsweise positive Spannungen) als auch Spannungen der zweiten Polarität (beispielsweise negative Spannungen) erzeugt werden können. Dadurch kann insbesondere der durch den Multilevelstromrichter fließende Strom kontrolliert werden. Dadurch kann kontrolliert Blindleistung für das Energieversorgungsnetz bereitgestellt bzw. an das Energieversorgungsnetz abgegeben werden. Der Multilevelstromrichter weist drei Modulzweige auf, er ist also vorzugsweise dreiphasig ausgebildet.

Jedes der Submodule der ersten Gruppe und jedes der Submodule der zweiten Gruppe weist jeweils einen elektrischen Energiespeicher und zwei elektronische Schaltelemente auf. Die Submodule der ersten Gruppe und die Submodule der zweiten Gruppe sind gleichartig aufgebaut. Die Bezeichnung "erstes elektronisches Schaltelement", "zweites elektronisches Schaltelement", "drittes elektronisches Schaltelement" usw. wird nur deshalb verwendet, um die einzelnen elektronischen Schaltelemente unterscheiden zu können. Das soll nicht bedeuten, dass die Submodule der ersten Gruppe und die Submodule der zweiten Gruppe unterschiedliche elektronische Schaltelemente aufweisen.

Die Anordnung kann so ausgestaltet sein, dass bei den Submodulen jeweils das erste elektronische Schaltelement und das zweite elektronische Schaltelement in einer Halbbrückenschaltung angeordnet sind und/oder das dritte elektronische Schaltelement und das vierte elektronische Schaltelement in einer Halbbrückenschaltung angeordnet sind. Eine Halbbrückenschaltung ist ausreichend, um eine Spannung mit einer einzigen Polarität in die Reihenschaltung zu schalten.

Die Anordnung kann so ausgestaltet sein, dass
- in mindestens einem Modulzweig jeweils ein Submodul der ersten Gruppe und ein Submodul der zweiten Gruppe ein Doppelsubmodul bilden, bei dem das erste elektronische Schaltelement, das zweite elektronische Schaltelement, das dritte elektronische Schaltelement und das vierte elektronische Schaltelement so angeordnet (verschaltet) sind, dass
- der erste elektrische Energiespeicher des Doppelsubmoduls (ausschließlich) mit der ersten Polarität in die Reihenschaltung geschaltet werden kann, und
- der zweite elektrische Energiespeicher des Doppelsubmoduls (ausschließlich) mit der zweiten Polarität in die Reihenschaltung geschaltet werden kann.

Vorteilhafterweise werden also zwei Halbbrücken-Submodule kombiniert und bilden das Doppelsubmodul.

Die Anordnung kann so ausgestaltet sein, dass bei dem Doppelsubmodul jeweils das erste elektronische Schaltelement und das zweite elektronische Schaltelement in einer Halbbrückenschaltung angeordnet sind und das dritte elektronische Schaltelement und das vierte elektronische Schaltelement in einer Halbbrückenschaltung angeordnet sind.

Die Anordnung kann so ausgestaltet sein, dass die elektronischen Schaltelemente jeweils als ein IGBT (Insulated-Gate Bipolar Transistor), IGCT (Integrated Gate-Commutated Thyristor), IEGT (Injection-Enhanced Gate Transistor) oder MOSFET (Metal-Oxide-Semiconductor Field-Effect Transistor) ausgebildet sind.

Die Anordnung kann auch so ausgestaltet sein, dass
- die Anordnung einen Transformator mit einer ersten Wicklung und einer zweiten Wicklung aufweist,
- der Multilevelstromrichter einen Wechselspannungsanschluss aufweist, und
- der Wechselspannungsanschluss mit der ersten Wicklung des Transformators verbunden ist und die zweite Wicklung des Transformators mit einem Energieversorgungsnetz verbindbar ist.

Die Anordnung kann so ausgestaltet sein, dass
- der Wechselspannungsanschluss des Multilevelstromrichters, die erste Wicklung des Transformators und/oder die zweite Wicklung des Transformators mehrphasig, insbesondere dreiphasig, ausgebildet sind.

Die Anordnung kann so ausgestaltet sein, dass
- der Multilevelstromrichter sechs Teilzweige aufweist, wobei jeder Teilzweig eine Teilmenge der Submodule des Multilevelstromrichters in einer (elektrischen) Reihenschaltung aufweist (so dass die Submodule des Multilevelstromrichters auf die sechs Teilzweige aufgeteilt sind),
- die sechs Teilzweige mechanisch wie bei einer B6-Brückenschaltung angeordnet sind, und
- die sechs Teilzweige elektrisch derart verschaltet sind, dass jeweils zwei Teilzweige einen der Modulzweige bilden (wobei die Modulzweige elektrisch in der Dreieckschaltung angeordnet sind).

Dies ermöglicht es vorteilhafterweise, den Multilevelstromrichter konstruktiv wie bei einer bekannten B6-Brückenschaltung aufzubauen, was Entwicklungskosten sparen kann.

Die Anordnung kann so ausgestaltet sein, dass
- jeder Teilzweig entweder die erste Gruppe der Submodule eines der Modulzweige oder die zweite Gruppe der Submodule eines der Modulzweige aufweist.

Daher kann jeder Teilzweig eine Spannung mit ausschließlich einer Polarität bereitstellen und/oder ausgeben.

Offenbart wird weiterhin ein Verfahren zur Blindleistungsabgabe an ein Energieversorgungsnetz, bei dem von einem Multilevelstromrichter Blindleistung erzeugt und an ein Energieversorgungsnetz abgegeben wird, wobei
- der Multilevelstromrichter drei Modulzweige aufweist, die in einer Dreieckschaltung angeordnet sind,
- jeder Modulzweig in einer elektrischen Reihenschaltung eine Mehrzahl von Submodulen aufweist,
- jeder Modulzweig eine erste Gruppe der Submodule und eine zweite Gruppe der Submodule aufweist, wobei
- die Submodule der ersten Gruppe jeweils einen ersten (unipolaren) elektrischen Energiespeicher, ein erstes elektronisches Schaltelement und ein zweites elektronisches Schaltelement aufweisen, wobei das erste elektronische Schaltelement und das zweite elektronische Schaltelement so angeordnet sind, dass der erste elektrische Energiespeicher (ausschließlich) mit einer ersten Polarität in die Reihenschaltung geschaltet werden kann,
- die Submodule der zweiten Gruppe jeweils einen zweiten (unipolaren) elektrischen Energiespeicher, ein drittes elektronisches Schaltelement und ein viertes elektronisches Schaltelement aufweisen, wobei das dritte elektronische Schaltelement und das vierte elektronische Schaltelement so angeordnet sind, dass der zweite elektrische Energiespeicher (ausschließlich) mit einer zweiten Polarität in die Reihenschaltung geschaltet werden kann, und
- die erste Polarität und die zweite Polarität (in der Reihenschaltung) entgegengesetzt zueinander gerichtet sind.

Das Verfahren kann so ablaufen, dass
- von den Submodulen der ersten Gruppe eine Spannung des ersten elektrischen Energiespeichers (ausschließlich) mit der ersten Polarität in die Reihenschaltung ausgegeben wird, und
- von den Submodulen der zweiten Gruppe eine Spannung des zweiten elektrischen Energiespeichers (ausschließlich) mit der zweiten Polarität in die Reihenschaltung ausgegeben wird.

Das Verfahren kann auch so ablaufen, dass
- in mindestens einem der Modulzweige, insbesondere in jedem der Modulzweige, durch Zusammenwirken der Submodule der ersten Gruppe des Modulzweigs und der Submodule der zweiten Gruppe des Modulzweigs eine zeitveränderliche Spannung erzeugt wird, die zeitweise die erste Polarität und zeitweise die zweite Polarität aufweist.

Das Verfahren kann so ausgestaltet sein, dass
- bei den Submodulen jeweils das erste elektronische Schaltelement und das zweite elektronische Schaltelement in einer Halbbrückenschaltung angeordnet sind und/oder das dritte elektronische Schaltelement und das vierte elektronische Schaltelement in einer Halbbrückenschaltung angeordnet sind.

Das Verfahren kann so ausgestaltet sein, dass
- in mindestens einem Modulzweig jeweils ein Submodul der ersten Gruppe und ein Submodul der zweiten Gruppe ein Doppelsubmodul bilden, bei dem das erste elektronische Schaltelement, das zweite elektronische Schaltelement, das dritte elektronische Schaltelement und das vierte elektronische Schaltelement so angeordnet (verschaltet) sind, dass
- der erste elektrische Energiespeicher des Doppelsubmoduls (ausschließlich) mit der ersten Polarität in die Reihenschaltung geschaltet werden kann, und
- der zweite elektrische Energiespeicher des Doppelsubmoduls (ausschließlich) mit der zweiten Polarität in die Reihenschaltung geschaltet werden kann.

Bei dem Doppelsubmodul kann jeweils das erste elektronische Schaltelement und das zweite elektronische Schaltelement in einer Halbbrückenschaltung angeordnet sein und das dritte elektronische Schaltelement und das vierte elektronische Schaltelement in einer Halbbrückenschaltung angeordnet sein.

Die Anordnung und das Verfahren weisen gleiche oder gleichartige Eigenschaften und/oder Vorteile auf.

Im Folgenden wird die Erfindung anhand eines Ausführungsbeispiels näher erläutert. Gleiche Bezugszeichen verweisen dabei auf gleiche oder gleich wirkende Elemente. Dazu ist in der
- Figur 1: ein Ausführungsbeispiel einer Anordnung mit einem modularen Multilevelstromrichter, in
- Figur 2: ein Ausführungsbeispiel des Multilevelstromrichters mit sechs Teilzweigen, die drei Modulzweige in einer elektrischen Dreieckschaltung bilden, in
- Figur 3: das Ausführungsbeispiel des Multilevelstromrichters aus Figur 2 in einer anderen Darstellung, in
- Figur 4: ein Ausführungsbeispiel eines nicht beanspruchten Multilevelstromrichters in einer B6-Brückenschaltung, in
- Figur 5: ein Ausführungsbeispiel eines Teilzweigs des Multilevelstromrichters, in
- Figur 6: ein Ausführungsbeispiel eines Submoduls des Multilevelstromrichters, in
- Figur 7: ein Ausführungsbeispiel einer Leistungshalbleiterschaltung des Submoduls, in
- Figur 8: ein Ausführungsbeispiel eines Energiespeichers des Submoduls, und in
- Figur 9: ein Ausführungsbeispiel eines Doppelsubmoduls dargestellt.

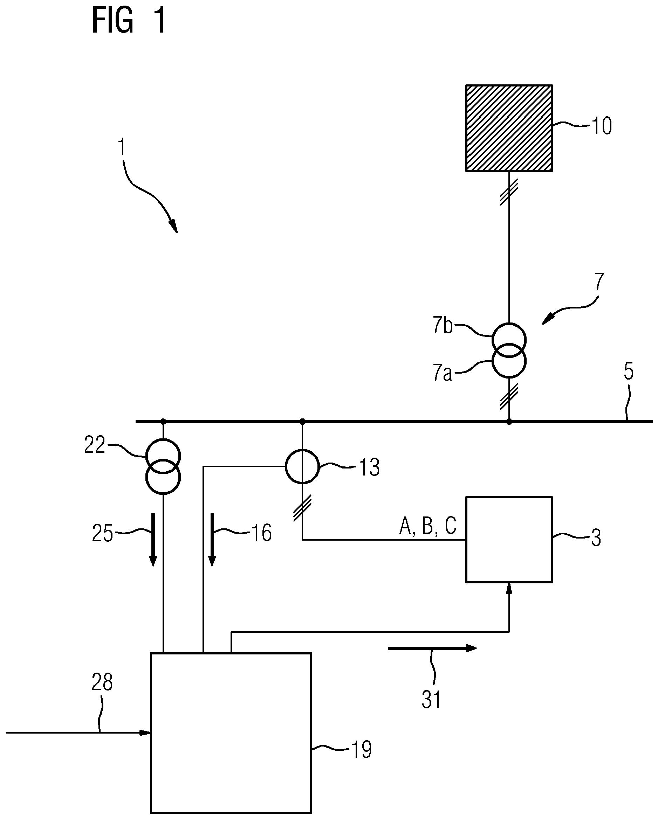

In Figur 1 ist eine Anordnung 1 mit einem modularen Multilevelstromrichter 3 (modularen Mehrstufenstromrichter 3) dargestellt. Der modulare Multilevelstromrichter 3 weist einen dreiphasigen Wechselspannungsanschluss A, B, C auf. Der modulare Multilevelstromrichter 3 ist über dessen dreiphasigen Wechselspannungsanschluss A, B, C, über eine Anschlussschiene 5 und einen dreiphasigen Transformator 7 dreiphasig mit einem Energieversorgungsnetz 10 elektrisch verbunden. Dabei ist der Wechselspannungsanschluss A, B, C des Multilevelumrichters 3 dreiphasig mit einer ersten dreiphasigen Wicklung 7a des Transformators elektrisch verbunden; eine zweite dreiphasige Wicklung 7b des Transformators ist elektrisch dreiphasig mit dem Energieversorgungsnetz 10 verbindbar bzw. verbunden. Das Energieversorgungsnetz 10 ist im Ausführungsbeispiel ein dreiphasiges Wechselspannungs-Energieversorgungsnetz 10.

Mittels eines Stromsensors 13 wird der durch den Stromrichter 3 fließende Strom gemessen. Strommesswerte 16 werden zu einer Ansteuereinheit 19 für den modularen Multilevelstromrichter 3 übertragen. Weiterhin wird mittels eines Spannungssensors 22 (der hier als ein Messwandler 22 ausgeführt ist) die an der Anschlussschiene 5 anliegende Spannung gemessen. Diese Spannung entspricht im Wesentlichen der an dem modularen Multilevelstromrichter 3 anliegenden Spannung. Spannungsmesswerte 25 werden zu der Ansteuereinheit 19 übertragen. Die Ansteuereinheit 19 vergleicht die Strommesswerte 16 und die Spannungsmesswerte 25 mit vorgegebenen Sollwerten 28. Daraufhin berechnet die Ansteuereinheit Ansteuersignale 31, die zu dem modularen Multilevelstromrichter 3 übertragen werden. Mittels dieser Ansteuersignale 31 wird der Multilevelstromrichter 3 derart angesteuert, dass sich an der Anschlussschiene 5 die gewünschten Strom- und Spannungswerte einstellen. Mit anderen Worten gesagt, kontrolliert die Ansteuereinheit 19 den Multilevelstromrichter 3. In einer derartigen Anordnung kann der modulare Multilevelstromrichter 3 beispielsweise zur Blindleistungserzeugung bzw. Blindleistungskompensation eingesetzt werden.

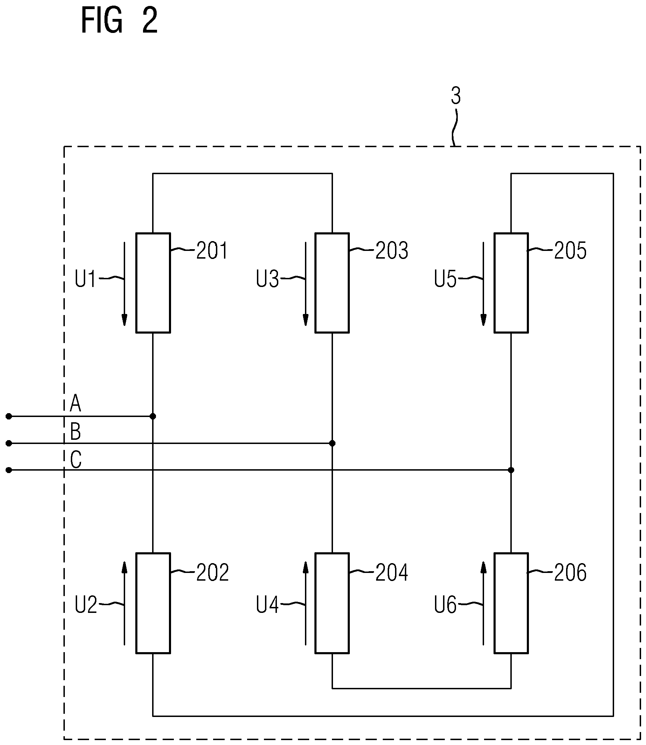

In Figur 2 ist ein Ausführungsbeispiel des Multilevelstromrichters 3 dargestellt, welcher sechs Teilzweige 201 bis 206 aufweist. Diese sechs Teilzweige 201 bis 206 sind elektrisch in Dreieckschaltung geschaltet. Die sechs Teilzweige 201 bis 206 sind also elektrisch so verschaltet, dass eine Dreieckschaltung gebildet ist. Die sechs Teilzweige 201 bis 206 sind seriell in einer Ringstruktur angeordnet, wobei jeweils nach zwei Teilzweigen eine der drei Phasen des Wechselspannungsanschlusses A, B, C angeordnet bzw. angeschlossen ist.

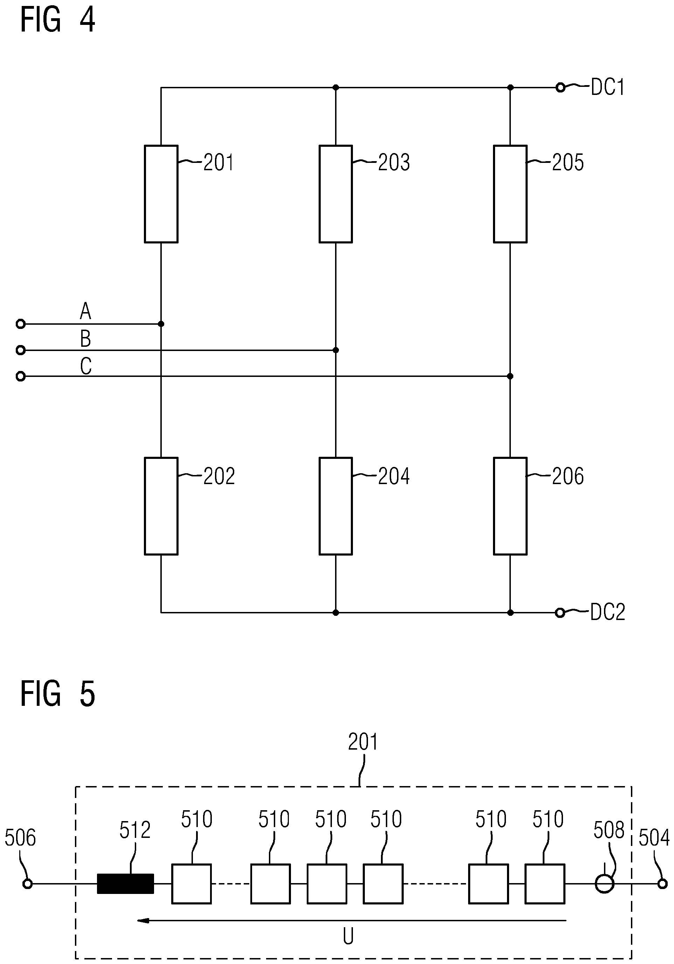

Der dreiphasige Wechselspannungsanschluss A, B, C des Multilevelstromrichters 3 ist (wie in Fig. 1 dargestellt) mit drei Phasen des Energieversorgungsnetzes 10 verbunden. Der Aufbau der Teilzweige 201 bis 206 ist in Figur 5 dargestellt.

An jedem der Teilzweige 201 bis 206 ist jeweils ein Spannungspfeil U angeordnet, der die Polarität der von dem jeweiligen Teilzweig bereitstellbaren elektrischen Spannung angibt.

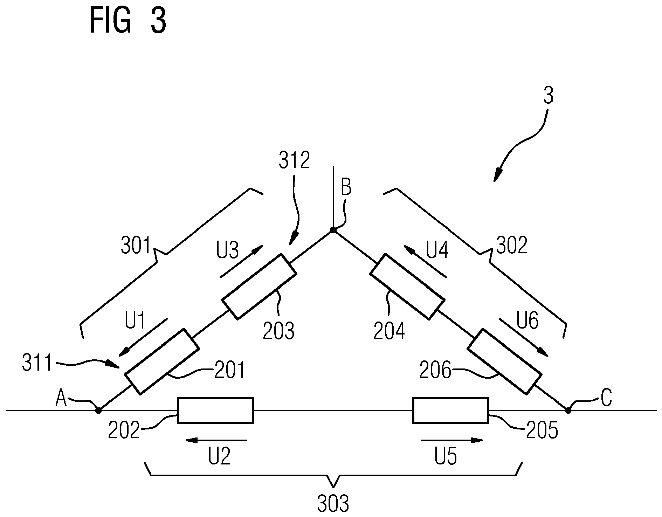

In Figur 3 ist der Multilevelstromrichter 3 aus Figur 2 in einer anderen zeichnerischen Darstellung gezeigt. In dieser Darstellung ist deutlicher zu erkennen, dass die sechs Teilzweige 201 bis 206 des Multilevelstromrichters 3 elektrisch in einer Dreieckschaltung angeordnet sind. Dabei bilden der erste Teilzweig 201 und der dritte Teilzweig 203 den ersten Modulzweig 301. Der vierte Teilzweig 204 und der sechste Teilzweig 206 bilden den zweiten Modulzweig 302. Der zweite Teilzweig 202 und der fünfte Teilzweig 205 bilden den dritten Modulzweig 303.

Im Beispiel weist der erste Teilzweig 201 die Submodule einer ersten Gruppe 311 auf, und der dritte Teilzweig 203 weist die Submodule einer zweiten Gruppe 312 auf. Der Spannungspfeil U1 des ersten Teilzweigs 201 ist entgegengesetzt gerichtet zum Spannungspfeil U3 des dritten Teilzweigs 203. Also hat die von dem ersten Teilzweig 201 ausgebbare bzw. ausgegebene Spannung U1 eine Polarität, die entgegengesetzt gerichtet ist zu der Polarität der von dem dritten Teilzweig 203 ausgebbaren bzw. ausgegebenen Spannung U3. Dies gilt in gleichartiger Weise auch für den vierten Teilzweig 204 und den sechsten Teilzweig 206 bzw. für den zweiten Teilzweig 202 und den fünften Teilzweig 205.

Jeder Modulzweig weist also Submodule mit der einen Polarität und Submodule mit der entgegengesetzten Polarität auf. Wenn die Anzahl der Submodule der einen Polarität (also zum Beispiel der Submodule der ersten Gruppe 311) gleich der Anzahl der Submodule der entgegengesetzten Polarität (also zum Beispiel der Submodule der zweiten Gruppe 312) ist, dann weist der jeweilige Modulzweig paarweise entgegengesetzt polarisierte Submodule auf. Insbesondere weist der Multilevelstromrichter 3 paarweise antiseriell geschaltete Submodule, insbesondere paarweise antiseriell geschaltete Halbbrücken-Submodule, auf.

Beim Betrieb des Multilevelstromrichters 3 wird in dem ersten Modulzweig 301 durch Zusammenwirken der Submodule 510 der ersten Gruppe 311 des ersten Modulzweigs 301 und der Submodule 510 der zweiten Gruppe 312 des ersten Modulzweigs 301 eine zeitveränderliche Spannung erzeugt, die zeitweise die erste Polarität (Spannung U1) und zeitweise die zweite Polarität (Spannung U3) aufweist. Der erste Modulzweig 301 kann also eine zeitveränderliche Spannung wechselnder Polarität erzeugen bzw. ausgeben, beispielsweise eine (angenähert sinusförmige) Wechselspannung. Dadurch kann mittels des Multilevelstromrichters 3 eine Blindleistung erzeugt und an das Energieversorgungsnetz 10 abgegeben werden.

In Figur 4 ist ein nicht beanspruchtes Ausführungsbeispiel eines anderen Multilevelstromrichters in einer B6-Brückenschaltung dargestellt. Die sechs Teilzweige 201 bis 206 sind in einer Brückenschaltung angeordnet. Dabei sind jeweils ein Anschluss zweier Teilzweige miteinander elektrisch verbunden und bilden eine Phase des Wechselspannungsanschlusses A, B, C.

Der andere Anschluss von drei Teilzweigen ist mit einem ersten Gleichspannungsanschluss DC1 (zum Beispiel einem positiven Gleichspannungsanschluss) verbunden; der andere Anschluss der drei anderen Teilzweige ist mit einem zweiten Gleichspannungsanschluss DC2 (zum Beispiel einem negativen Gleichspannungsanschluss) verbunden.

Bei Vergleich der Figuren 2 und 4 ist gut zu erkennen, dass bei dem Multilevelstromrichter 3 gemäß Figur 2 die sechs Teilzweige 201 bis 206 mechanisch wie bei der B6-Brückenschaltung gemäß Figur 4 angeordnet sind. Elektrisch sind bei dem Multilevelstromrichter 3 gemäß Figur 2 die sechs Teilzweige 201 bis 206 jedoch derart verschaltet, dass jeweils zwei Teilzweige einen der Modulzweige bilden und die Modulzweige elektrisch in der Dreieckschaltung angeordnet sind. Die sechs Teilzweige 201 bis 206 bilden also die elektrische Dreieckschaltung.

Wenn beispielsweise ein Stromrichter für die Hochspannungs-Gleichstromübertragung in B6-Brückenschaltung mit einem Turmaufbau (Stromrichterturm) schon entwickelt worden ist, dann kann für einen neu zu entwickelnden Stromrichter für die Blindleistungserzeugung vorteilhafterweise der schon bekannte Turmaufbau wiederverwendet werden, wobei die einzelnen Teilzweige lediglich anders verschaltet zu werden brauchen. Dies kann in erheblichem Maße Entwicklungskosten sparen.

In Figur 5 ist ein Ausführungsbeispiel des ersten Teilzweigs 201 näher dargestellt. Die anderen Teilzweige 202 bis 206 sind gleichartig aufgebaut. Der erste Teilzweig 201 weist einen ersten Anschluss 504 (erster Teilzweiganschluss 504) sowie einen zweiten Anschluss 506 (zweiter Teilzweiganschluss 506) auf. Der ersten Anschluss 504 ist über einen Stromsensor 508 mit einem ersten Submodul 510 elektrisch verbunden. Das erste Submodul 510 ist elektrisch in Reihe geschaltet mit weiteren Submodulen 510; insgesamt weist der erste Teilzweig 201 n Submodule 510 auf. Das letzte der n Submodule 510 ist über eine Koppelinduktivität 512 elektrisch mit dem zweiten Anschluss 506 verbunden. Mittels des Stromsensors 508 wird der durch den ersten Teilzweig 201 fließende Strom gemessen. Der Pfeil U (Spannungspfeil U) gibt die Richtung der Polarität der Spannung an, die von dem ersten Teilzweig 201 ausgebbar ist. Jeder Teilzweig kann eine Spannung mit einer ersten Polarität oder mit einer zweiten Polarität (die entgegengesetzt zur ersten Polarität ist) ausgeben. Wenn ein Teilzweig Doppelsubmodule aufweist, dann kann dieser Teilzweig eine Spannung mit einer ersten Polarität und alternativ auch eine Spannung mit der zweiten Polarität ausgeben. Solche Pfeile U sind auch in den Figuren 2 und 3 angegeben.

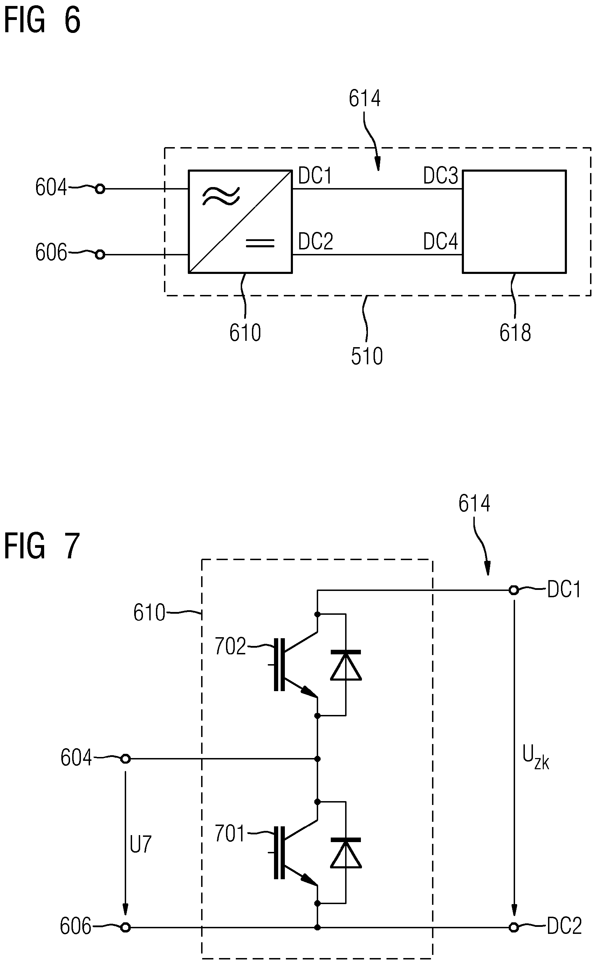

In Figur 6 ist ein Ausführungsbeispiel des Submoduls 510 im Detail dargestellt. Das zweipolige Submodul 510 weist einen ersten Submodulanschluss 604 und einen zweiten Submodulanschluss 606 auf. Die beiden Submodulanschlüsse 604 und 606 sind mit einer Leistungshalbleiterschaltung 610 verbunden (genauer gesagt mit einem Wechselspannungsanschluss der Leistungshalbleiterschaltung 610). Ein Gleichspannungsanschluss DC1, DC2 der Leistungshalbleiterschaltung 610 ist über einen Gleichspannungszwischenkreis 614 mit einem Gleichspannungsanschluss DC3, DC4 eines elektrischen Energiespeichers 618 verbunden. Der elektrische Energiespeicher 618 kann beispielsweise einen Kondensator aufweisen; der Energiespeicher 618 kann also beispielsweise als ein Kondensatormodul ausgestaltet sein.

In Figur 7 ist ein Ausführungsbeispiel der Leistungshalbleiterschaltung 610 dargestellt. Die Leistungshalbleiterschaltung 610 kann auch als ein Powermodul bezeichnet werden. Die Leistungshalbleiterschaltung 610 weist ein erstes elektronisches Schaltelement 701 und ein zweites elektronisches Schaltelement 702 auf. Das erste elektronische Schaltelement 701 und das zweite elektronische Schaltelement 702 sind jeweils als ein ein- und ausschaltbares elektronisches Schaltelement ausgestaltet, insbesondere als ein ein- und ausschaltbares leistungselektronisches Schaltelement.

Jedes der elektronischen Schaltelemente 701, 702 weist ein Leistungshalbleiterbauelement mit einer antiparallel geschalteten Diode auf. Im Ausführungsbeispiel der Figur 7 ist das Leistungshalbleiterbauelement ein IGBT (Insulated-Gate Bipolar Transistor). In anderen Ausführungsbeispielen kann das Leistungshalbleiterbauelement jedoch auch anders ausgestaltet sein, zum Beispiel als ein IGCT (Integrated Gate-Commutated Thyristor), IEGT (Injection-Enhanced Gate Transistor) oder als ein MOSFET (Metal-Oxide-Semiconductor Field-Effect Transistor). Die zwei elektronischen Schaltelemente 701 und 702 bilden im Ausführungsbeispiel der Figur 7 eine Halbbrückenschaltung. Das Submodul ist also ein Halbbrücken-Submodul. Zwischen dem ersten Submodulanschluss 604 und dem zweiten Submodulanschluss 606 kann eine Spannung mit einer einzigen Polarität (oder null Volt) ausgegeben werden, wie sie durch den Spannungspfeil U7 symbolisiert ist. An dem Gleichspannungszwischenkreis 614 tritt eine Zwischenkreisspannung auf, die durch einen Spannungspfeil Uzk symbolisiert ist.

Überraschenderweise ist pro Stromhalbwelle nur ein Teil (beispielsweise die Hälfte) der Halbbrücken-Submodule eines Modulzweigs aktiv, beispielsweise die Halbbrücken-Submodule der ersten Gruppe. Der andere Teil (beispielsweise die andere Hälfte) der Halbbrücken-Submodule (beispielsweise die Halbbrücken-Submodule der zweiten Gruppe) wird während der Stromhalbwelle durch die antiparallele Diode (Rückwärtsdiode) des jeweiligen ersten elektronischen Schaltelements 701 überbrückt. Dadurch verringert (insbesondere halbiert) sich die Effektivstrombelastung des Energiespeichers des jeweiligen Halbbrücken-Submoduls.

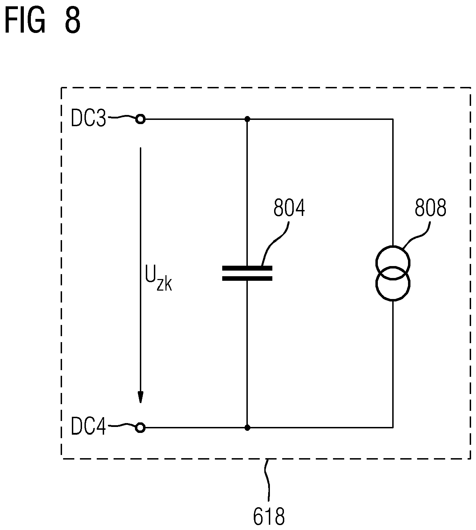

Figur 8 zeigt ein Ausführungsbeispiel des Energiespeichers 618. Der Energiespeicher 618 weist einen Kondensator 804 auf. Der Kondensator 804 puffert die Zwischenkreisspannung Uzk. Parallel zu dem Kondensator 804 ist eine Spannungsmesseinrichtung 808 geschaltet.

In den Figuren 6 bis 8 ist also ein Halbbrücken-Submodul dargestellt, genauer gesagt ein Halbbrücken-Submodul der ersten Gruppe der Submodule. Ein Halbbrücken-Submodul der zweiten Gruppe der Submodule ist gleichartig aufgebaut. Ein solches Submodul weist also jeweils mindestens einen unipolaren elektrischen Energiespeicher und zwei elektronische Schaltelemente auf.

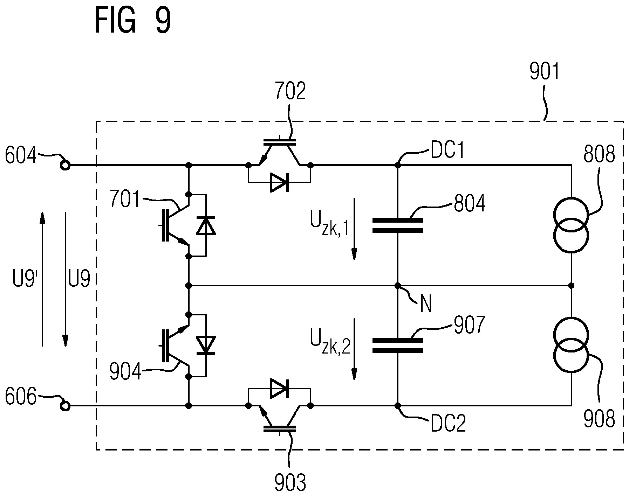

In Figur 9 ist ein Ausführungsbeispiel eines Doppelsubmoduls 901 dargestellt. Das Doppelsubmodul 901 weist neben dem ersten elektronischen Schaltelement 701 und dem zweiten elektronischen Schaltelement 702 ein drittes elektronisches Schaltelement 903 und ein viertes elektronisches Schaltelement 904 auf. Das erste elektronische Schaltelement 701 und das zweite elektronische Schaltelement 702 sind in einer ersten Halbbrückenschaltung angeordnet; das dritte elektronische Schaltelement 903 und das vierte elektronische Schaltelement 904 sind in einer zweiten Halbbrückenschaltung angeordnet.

Zusätzlich zu dem ersten Energiespeicher in Form des ersten Kondensators 804 und zu der ersten Spannungsmesseinrichtung 808 weist das Doppelsubmodul 901 einen zweiten Energiespeicher in Form eines zweiten Kondensators 907 und eine zweite Spannungsmesseinrichtung 908 auf. Das Doppelsubmodul 901 weist ebenfalls zwei Gleichspannungszwischenkreise mit einer ersten Zwischenkreisspannung Uzk,1 bzw. einer zweiten Zwischenkreisspannung Uzk,2 auf. Der Verbindungspunkt zwischen dem ersten Energiespeicher 804 und dem zweiten Energiespeicher 907 bildet den gemeinsamen Masseanschluss N des Doppelsubmoduls 901.

Das erste elektronische Schaltelement 701, das zweite elektronische Schaltelement 702, das dritte elektronische Schaltelement 903 und das vierte elektronische Schaltelement 904 sind so angeordnet, dass die Spannung des ersten elektrischen Energiespeichers 804 (ausschließlich) mit der ersten Polarität U9 zwischen dem ersten Submodulanschluss 604 und dem zweiten Submodulanschluss 606 ausgegeben werden kann und dass die Spannung des zweiten elektrischen Energiespeichers 907 (ausschließlich) mit der zweiten Polarität U9` zwischen dem ersten Submodulanschluss 604 und dem zweiten Submodulanschluss 606 ausgegeben werden kann. Die erste Polarität U9 ist dabei entgegengesetzt zur zweiten Polarität U9`. Das ist durch die beiden Spannungspfeile U9 und U9' zwischen dem ersten Submodulanschluss 604 und dem zweiten Submodulanschluss 606 symbolisiert.

Das Doppelsubmodul 901 weist also zwei Halbbrückenschaltungen auf; es kann auch als ein Doppelhalbbrückensubmodul 901 bezeichnet werden. Das Doppelsubmodul 901 weist ein Halbbrücken-Submodul der ersten Gruppe der Submodule und ein Halbbrücken-Submodul der zweiten Gruppe der Submodule auf; das Doppelsubmodul 901 kombiniert also ein Halbbrücken-Submodul der ersten Gruppe der Submodule und ein Halbbrücken-Submodul der zweiten Gruppe der Submodule.

Es wurde eine Anordnung mit einem Multilevelstromrichter zur Blindleistungsabgabe an ein Energieversorgungsnetz und ein Verfahren zur Blindleistungsabgabe an ein Energieversorgungsnetz beschrieben. Dabei werden insbesondere Halbbrücken-Submodule verwendet; Vollbrücken-Submodule sind vorteilhafterweise nicht notwendig (der Multilevelstromrichter ist vollbrückenfrei). Da aktuell Halbbrücken-Submodule in weit größerer Zahl eingesetzt werden als Vollbrücken-Submodule (beispielsweise bei Stromrichtern für die Hochspannungs-Gleichstromübertragung), sind Halbbrücken-Submodule kostengünstiger als Vollbrücken-Submodule. Außerdem liegen logistische Vorteile vor, wenn Halbbrücken-Submodule als Gleichteile zu anderen Stromrichtern eingesetzt werden können. Beispielsweise können in Stromrichtern zur Blindleistungserzeugung und in Stromrichtern für die Hochspannungs-Gleichstromübertragung vorteilhafterweise Halbbrücken-Submodule eingesetzt werden.

### Bezugszeichen:

- 1: Anordnung
- 3: modularer Multilevelstromrichter
- 5: Anschlussschiene
- 7: Transformator
- 7a: erste Wicklung
- 7b: zweite Wicklung
- 10: Energieversorgungsnetz
- 13: Stromsensor
- 16: Strommesswerte
- 19: Ansteuereinheit
- 22: Spannungssensor
- 25: Spannungsmesswerte
- 28: Sollwerte
- 31: Ansteuersignale
- 201: erster Teilzweig
- 202: zweiter Teilzweig
- 203: dritter Teilzweig
- 204: vierter Teilzweig
- 205: fünfter Teilzweig
- 206: sechster Teilzweig
- 301: erster Modulzweig
- 302: zweiter Modulzweig
- 303: dritter Modulzweig
- 311: erste Gruppe von Submodulen
- 312: zweite Gruppe von Submodulen
- 504: erster Anschluss
- 506: zweiter Anschluss
- 508: Stromsensor
- 510: Submodul
- 512: Koppelinduktivität
- 604: erster Submodulanschluss
- 606: zweiter Submodulanschluss
- 610: Leistungshalbleiterschaltung
- 614: Gleichspannungszwischenkreis
- 618: Energiespeicher
- 701: erstes elektronisches Schaltelement
- 702: zweites elektronisches Schaltelement
- 804: erster Kondensator
- 808: erste Spannungsmesseinrichtung
- 901: Doppelsubmodul
- 903: drittes elektronisches Schaltelement
- 904: viertes elektronisches Schaltelement
- 907: zweiter Kondensator
- 908: zweite Spannungsmesseinrichtung
- A, B, C: Wechselspannungsanschluss
- U: Spannungspfeil
- U1: erster Spannungspfeil
- U2: zweiter Spannungspfeil
- U3: dritter Spannungspfeil
- U4: vierter Spannungspfeil
- U5: fünfter Spannungspfeil
- U6: sechster Spannungspfeil
- U7, U7`: Spannungspfeile
- U9, U9': Spannungspfeile
- Uzk: Zwischenkreisspannung
- Uzk,1: erste Zwischenkreisspannung
- Uzk,2: zweite Zwischenkreisspannung
- N: Masseanschluss
- DC1, DC2: Gleichspannungsanschluss
- DC3, DC4: Gleichspannungsanschluss

## Patentansprüche

1. Anordnung (1) mit einem Multilevelstromrichter (3) zur Blindleistungsabgabe an ein Energieversorgungsnetz (10), wobei
- der Multilevelstromrichter (3) drei Modulzweige (301, 302, 302) aufweist, die in einer Dreieckschaltung angeordnet sind,
- jeder Modulzweig (301, 302, 302) in einer elektrischen Reihenschaltung eine Mehrzahl von Submodulen (510) aufweist,
- jeder Modulzweig (301, 302, 302) eine erste Gruppe (311) der Submodule (510) und eine zweite Gruppe (312) der Submodule (510) aufweist, wobei
- die Submodule (510) der ersten Gruppe (311) jeweils einen ersten elektrischen Energiespeicher (618), ein erstes elektronisches Schaltelement (701) und ein zweites elektronisches Schaltelement (702) aufweisen, wobei das erste elektronische Schaltelement (701) und das zweite elektronische Schaltelement (702) so angeordnet sind, dass der erste elektrische Energiespeicher (618) mit einer ersten Polarität (U1) in die Reihenschaltung geschaltet werden kann,
- die Submodule (510) der zweiten Gruppe (312) jeweils einen zweiten elektrischen Energiespeicher, ein drittes elektronisches Schaltelement und ein viertes elektronisches Schaltelement aufweisen, wobei das dritte elektronische Schaltelement und das vierte elektronische Schaltelement so angeordnet sind, dass der zweite elektrische Energiespeicher mit einer zweiten Polarität (U3) in die Reihenschaltung geschaltet werden kann, und
- die erste Polarität und die zweite Polarität entgegengesetzt zueinander gerichtet sind.

2. Anordnung nach Anspruch 1,
**dadurch gekennzeichnet, dass**
- bei den Submodulen (510) jeweils das erste elektronische Schaltelement (701) und das zweite elektronische Schaltelement (702) in einer Halbbrückenschaltung angeordnet sind oder das dritte elektronische Schaltelement und das vierte elektronische Schaltelement in einer Halbbrückenschaltung angeordnet sind.

3. Anordnung nach Anspruch 1 oder 2,
**dadurch gekennzeichnet, dass**
- in mindestens einem Modulzweig (301, 302, 302) jeweils ein Submodul (510) der ersten Gruppe und ein Submodul (510) der zweiten Gruppe ein Doppelsubmodul (901) bilden, bei dem das erste elektronische Schaltelement (701), das zweite elektronische Schaltelement (702), das dritte elektronische Schaltelement (903) und das vierte elektronische Schaltelement (904) so angeordnet sind, dass
- der erste elektrische Energiespeicher (804) des Doppelsubmoduls (901) mit der ersten Polarität (U9) in die Reihenschaltung geschaltet werden kann, und
- der zweite elektrische Energiespeicher (907) des Doppelsubmoduls (901) mit der zweiten Polarität (U9`) in die Reihenschaltung geschaltet werden kann.

4. Anordnung nach Anspruch 3,
**dadurch gekennzeichnet, dass**
- bei dem Doppelsubmodul (901) jeweils das erste elektronische Schaltelement (701) und das zweite elektronische Schaltelement (702) in einer Halbbrückenschaltung angeordnet sind und das dritte elektronische Schaltelement (903) und das vierte elektronische Schaltelement (904) in einer Halbbrückenschaltung angeordnet sind.

5. Anordnung nach einem der vorhergehenden Ansprüche, **dadurch gekennzeichnet, dass**
- die elektronischen Schaltelemente (701, 702, 903, 904) jeweils als IGBT, IGCT, IEGT oder MOSFET ausgebildet sind.

6. Anordnung nach einem der vorhergehenden Ansprüche, **dadurch gekennzeichnet, dass**
- die Anordnung einen Transformator (7) mit einer ersten Wicklung (7a) und einer zweiten Wicklung (7b) aufweist,
- der Multilevelstromrichter (3) einen Wechselspannungsanschluss (A, B, C) aufweist, und
- der Wechselspannungsanschluss (A, B, C) mit der ersten Wicklung (7a) des Transformators (7) verbunden ist und die zweite Wicklung (7b) des Transformators (7) mit einem Energieversorgungsnetz (10) verbindbar ist.

7. Anordnung nach Anspruch 6,
**dadurch gekennzeichnet, dass**
- der Wechselspannungsanschluss (A, B, C) des Multilevelstromrichters (3), die erste Wicklung (7a) des Transformators (7) und/oder die zweite Wicklung (7b) des Transformators (7) mehrphasig, insbesondere dreiphasig, ausgebildet sind.

8. Anordnung nach einem der vorhergehenden Ansprüche, **dadurch gekennzeichnet, dass**
- der Multilevelstromrichter (3) sechs Teilzweige (201 ... 206) aufweist, wobei jeder Teilzweig eine Teilmenge der Submodule (510) des Multilevelstromrichters (3) in einer Reihenschaltung aufweist,
- die sechs Teilzweige (201 ... 206) mechanisch wie bei einer B6-Brückenschaltung angeordnet sind, und
- die sechs Teilzweige (201 ... 206) elektrisch derart verschaltet sind, dass jeweils zwei Teilzweige (201, 203) einen der Modulzweige (301) bilden.

9. Anordnung nach Anspruch 8,
**dadurch gekennzeichnet, dass**
- jeder Teilzweig (201) entweder die erste Gruppe (311) der Submodule (510) eines der Modulzweige (301) oder die zweite Gruppe (312) der Submodule (510) eines der Modulzweige (301) aufweist.

10. Verfahren zur Blindleistungsabgabe an ein Energieversorgungsnetz (10), bei dem von einem Multilevelstromrichter (3) Blindleistung erzeugt und an ein Energieversorgungsnetz (10) abgegeben wird, wobei
- der Multilevelstromrichter (3) drei Modulzweige (301, 302, 303) aufweist, die in einer Dreieckschaltung angeordnet sind,
- jeder Modulzweig (301, 302, 303) in einer elektrischen Reihenschaltung eine Mehrzahl von Submodulen (510) aufweist,
- jeder Modulzweig (301, 302, 303) eine erste Gruppe (311) der Submodule (510) und eine zweite Gruppe (312) der Submodule (510) aufweist, wobei
- die Submodule (510) der ersten Gruppe (311) jeweils einen ersten elektrischen Energiespeicher (618), ein erstes elektronisches Schaltelement (701) und ein zweites elektronisches Schaltelement (702) aufweisen, wobei das erste elektronische Schaltelement (701) und das zweite elektronische Schaltelement (702) so angeordnet sind, dass der erste elektrische Energiespeicher (618) mit einer ersten Polarität in die Reihenschaltung geschaltet werden kann,
- die Submodule (510) der zweiten Gruppe (312) jeweils einen zweiten elektrischen Energiespeicher, ein drittes elektronisches Schaltelement und ein viertes elektronisches Schaltelement aufweisen, wobei das dritte elektronische Schaltelement und das vierte elektronische Schaltelement so angeordnet sind, dass der zweite elektrische Energiespeicher mit einer zweiten Polarität in die Reihenschaltung geschaltet werden kann, und
- die erste Polarität und die zweite Polarität entgegengesetzt zueinander gerichtet sind.

11. Verfahren nach Anspruch 10,
**dadurch gekennzeichnet, dass**
- von den Submodulen (510) der ersten Gruppe (311) eine Spannung des ersten elektrischen Energiespeichers (618) mit der ersten Polarität in die Reihenschaltung ausgegeben wird,
und
- von den Submodulen (510) der zweiten Gruppe (312) eine Spannung des zweiten elektrischen Energiespeichers mit der zweiten Polarität in die Reihenschaltung ausgegeben wird.

12. Verfahren nach Anspruch 10 oder 11,
**dadurch gekennzeichnet, dass**
- in mindestens einem der Modulzweige (301), insbesondere in jedem der Modulzweige (301, 302, 303), durch Zusammenwirken der Submodule (510) der ersten Gruppe (311) des Modulzweigs (301) und der Submodule (510) der zweiten Gruppe (312) des Modulzweigs (301) eine zeitveränderliche Spannung erzeugt wird, die zeitweise die erste Polarität (U1) und zeitweise die zweite Polarität (U3) aufweist.

13. Verfahren nach einem der Ansprüche 10 bis 12,
**dadurch gekennzeichnet, dass**
- bei den Submodulen (510) jeweils das erste elektronische Schaltelement (701) und das zweite elektronische Schaltelement (702) in einer Halbbrückenschaltung angeordnet sind oder das dritte elektronische Schaltelement und das vierte elektronische Schaltelement in einer Halbbrückenschaltung angeordnet sind.

14. Verfahren nach einem der Ansprüche 10 bis 13,
**dadurch gekennzeichnet, dass**
- in mindestens einem Modulzweig (301) jeweils ein Submodul der ersten Gruppe und ein Submodul der zweiten Gruppe ein Doppelsubmodul (901) bilden, bei dem das erste elektronische Schaltelement (701), das zweite elektronische Schaltelement (702), das dritte elektronische Schaltelement (903) und das vierte elektronische Schaltelement (904) so angeordnet sind, dass
- der erste elektrische Energiespeicher (804) des Doppelsubmoduls (901) mit der ersten Polarität (U9) in die Reihenschaltung geschaltet werden kann, und
- der zweite elektrische Energiespeicher (907) des Doppelsubmoduls (901) mit der zweiten Polarität (U9`) in die Reihenschaltung geschaltet werden kann.

15. Verfahren nach Anspruch 14,
**dadurch gekennzeichnet, dass**
- bei dem Doppelsubmodul (901) jeweils das erste elektronische Schaltelement (701) und das zweite elektronische Schaltelement (702) in einer Halbbrückenschaltung angeordnet sind und das dritte elektronische Schaltelement und das vierte elektronische Schaltelement in einer Halbbrückenschaltung angeordnet sind.
